# DEMANDE DE BREVET EUROPEEN

(11) **EP 4 124 610 A1**
(43) Date de publication de la demande: **01.02.2023**
(21) Numéro de dépôt: 22194248.5
(22) Date de dépôt: 31.12.2019
(51) Int. Cl.: C04B 28/00

(54) **NOUVELLE FORMULATION POUR LIANT DE CONSTRUCTION BAS CARBONE, PROCEDE DE PREPARATION ET MATERIAUX DE CONSTRUCTION**

(30) Priorité: 31.12.2018 EP 18306902; 08.02.2019 FR 1901300
(62) Demande divisionnaire de: 19848998.1
(71) Demandeur: Materrup, 40230 Saint-Geours-de-Maremne (FR)
(72) Inventeur: NEUVILLE, Mathieu, 40140 Soustons (FR)
(74) Mandataire: A.P.I. Conseil

(57) **Abrégé**

L'invention porte sur une formulation pour liant de construction bas carbone comportant, sous forme déshydratée, une matrice argileuse crue et un agent de défloculation. Elle porte également sur un liant de construction, un procédé de préparation de ce liant de construction ainsi que sur un matériau de construction comprenant le liant de construction selon l'invention.

## Description

L'invention s'intéresse au domaine des matériaux de construction, et plus particulièrement celui des liants pouvant être utilisés en construction. L'invention concerne une formulation pour liant de construction. L'invention concerne également un procédé de préparation d'un liant de construction, le liant de construction en tant que tel ainsi que l'utilisation d'un tel liant dans la réalisation de matériaux de construction.

### [Art antérieur]

Le ciment est la deuxième ressource la plus consommée au monde, avec plus de 4 milliards de tonnes de matériaux produits chaque année dans le monde et cette consommation est en constante augmentation portée par la demande croissante de logements et d'infrastructures. Le ciment est un liant généralement hydraulique qui, mélangé à de l'eau, durcit et prend en masse. Après durcissement, le ciment conserve sa résistance ainsi que sa stabilité et cela même exposé à l'eau. Il existe une grande variété de ciments utilisés par le monde. Néanmoins tous les ciments conventionnels comportent un clinker à un pourcentage variant de 5 % pour certains ciments de hauts fourneaux à un minimum de 95 % pour le ciment Portland qui est le ciment aujourd'hui le plus utilisé par le monde.

Le clinker résulte de la cuisson d'un mélange composé d'environ 80 % de calcaire et de 20 % d'aluminosilicates (tels que des argiles). Cette cuisson, la clinkérisation, se fait à une température de plus de 1200°C, un tel processus de préparation de ciments implique donc une forte consommation énergétique. De plus, la conversion chimique du calcaire en chaux libère également du dioxyde de carbone. En conséquence, l'industrie du ciment génère environ 8% des émissions mondiales de CO₂. Face à ce défi, l'industrie et les chercheurs étudient les possibilités de réduire l'impact des émissions de dioxyde de carbone générées par l'industrie du ciment.

Une première solution a conduit à la création d'une cimenterie fonctionnant à partir d'une combinaison de carburants de substitution à base de déchets et de technologies liées à la captation et au stockage du carbone émis lors de la production de ciments, pour atteindre le statut zéro émission. Néanmoins, ces solutions ne sont pas encore disponibles à l'échelle industrielle et nécessitent des investissements lourds.

La voie privilégiée concerne les recherches de substituants au ciment Portland bien trop énergivore. En effet, le développement de liants de construction alternatifs, nécessitant une moindre consommation énergétique pour leur production permettrait de faire baisser l'empreinte énergétique de toute la filière de construction (Maddalena, et al, « Can Portland cement be replaced by low-carbon alternative materials? A study on the thermal properties and carbon emissions of innovative Cements », Journal of Cleaner Production 186 ; 2018 ; 933-942).

Il a par exemple été proposé un nouveau liant hydraulique s'apparentant à du ciment Portland mais comportant des constituants secondaires tels que les cendres formées lors de la combustion du charbon dans les centrales. Néanmoins, les constituants secondaires (cendres, pouzzolane, laitiers de haut fourneaux) représentent généralement au maximum 35 % du mélange et ce ciment Portland composé comporte alors au moins 50 % de clinker. Cela reste un taux de clinker trop élevé pour constituer une réelle alternative bas carbone au ciment Portland.

Il a également été proposé des liants hydrauliques ou ciments à base de métakaolin. Le métakaolin est un silicate d'alumine déshydroxylé de composition générale Al₂Si₂O₇, il constitue un produit de déshydratation largement amorphe de la kaolinite, de formule générale Al₂(OH)₄Si₂O₅ qui présente une forte activité pouzzolanique. De manière générale, l'activité pouzzolanique d'un matériau peut être définie comme la capacité d'un matériau, ne possédant pas de propriétés liantes, mais qui sous forme finement divisée et en présence d'humidité, réagit chimiquement avec de l'hydroxyde de calcium à température ambiante pour former des composés possédant des propriétés liantes. Les argiles kaolinitiques sont largement disponibles dans la croûte terrestre et un traitement thermique (e.g. de 600 à 800°C pendant une courte durée dit « flashé ») conduit à la déshydroxylation de la structure cristalline de la kaolinite pour donner du métakaolin. Le mélange de chaux ou d'hydroxyde de sodium et de métakaolin lors de l'hydratation du ciment va induire une réaction pouzzolanique. Cette réaction améliore les propriétés liantes des ciments à base de métakaolin. Du fait de ces propriétés, il a été proposé des matériaux de construction à base de metakaolin comportant notamment un métakaolin flashé associé à de l'hydroxyde de sodium, tel que décrit dans le document FR3034094 ou US10315115. Les propriétés rhéologiques de ces liants de construction peuvent notamment être améliorées par l'ajout de plastifiants ou de réducteurs d'eau de type polyacrylates ou lignosulfonates. Néanmoins de tels procédés, nécessitant de hautes montées en température présentent une consommation énergétique élevée et donc une empreinte carbone à améliorer.

Par ailleurs, l'utilisation de kaolinite non calcinée ou plus largement de matrice argileuse crue a été proposée pour des ciments ayant des empreintes carbones plus faibles (N.A. Hadi, « Geo Polymerization of Kaolin and Metakaolin Incorporating NaOH and High Calcium Ash », Earth Science Research Vol. 5, No. 1; 2016). Néanmoins, ces ciments, tels que décrits dans le document FR3016376, présentaient soit des propriétés physiques, telle que l'amélioration de la résistance mécanique, la réduction de l'absorption capillaire, ou encore la réduction de la perméabilité aux liquides, trop faibles, soit nécessitaient l'ajout d'une portion de ciment Portland pour pouvoir présenter des propriétés mécaniques acceptables.

En outre, classiquement, il a été proposé d'ajouter à la terre des liants de construction de façon à former des matériaux de construction. Néanmoins, ces matériaux de construction présentent des propriétés mécaniques limitées. En effet, l'ouvrage intitulé « Construire en terre crue, construction - rénovation - finitions » de Ulrich Röhlen et Christof Ziegert (2013, éditions le Moniteur ISBN 978-2-281-11567-3), indique que la résistance à la compression d'un béton de terre varie de 0,6 MPa à 12 MPa maximum, avec une valeur courante de l'ordre de 3 MPa. En outre, l'ouvrage intitulé « traité de construction en terre », mesure l'évolution de la résistance à la compression de terres stabilisées au ciment, et montre notamment que la valeur de résistance à la compression d'un béton de terre contenant 7% de ciment (soit 50% de ciment dans le liant constitué du ciment et d'argile) ne dépasse jamais 12 MPa. Cela a toujours dissuadé les constructeurs d'utiliser des teneurs trop élevées en argiles crues dans les liants de construction et plus largement les matériaux de constructions nécessitant des résistances à la compression élevées.

Ainsi, il existe un besoin pour de nouvelles formulations de liants de construction présentant une faible empreinte carbone tout en générant des propriétés mécaniques des bétons au moins équivalentes voire supérieures aux propriétés mécaniques des bétons issus des ciments couramment utilisés dans le domaine de la construction, tels que les ciments CEM I, CEM II, CEM III, CEM IV et CEM V définis par la norme NF EN 197-1.

### [Problème technique]

L'invention a donc pour but de remédier aux inconvénients de l'art antérieur. En particulier, l'invention a pour but de proposer une formulation pour liant de construction permettant d'une part d'obtenir un matériau de construction aux propriétés mécaniques au moins équivalentes au ciment Portland, et d'autre part d'améliorer le confort des habitants par rapport à un béton formé à partir de ciment Portland.

L'invention a en outre pour but de proposer un procédé de fabrication d'un liant de construction permettant de diminuer l'émission de gaz à effets de serre, tel que le dioxyde de carbone émis lors de la préparation d'un tel liant, tout en préservant les caractéristiques mécaniques adaptées dudit liant relatives à son utilisation dans le domaine de la construction. L'invention porte en outre sur l'utilisation d'un liant de construction pour la réalisation d'éléments de construction, capable d'améliorer le confort des habitants par rapport à un béton classique et notamment les propriétés hygrothermiques des bâtiments.

### [Brève description de l'invention]

A cet effet, l'invention porte sur **une formulation pour liant de construction** comportant, sous forme déshydratée, une matrice argileuse crue et un agent de défloculation.

Ainsi, cette formulation déshydratée a pour vocation à remplacer, totalement ou en partie, des ciments conventionnels tels que le ciment Portland, la chaux, ou encore le ciment d'aluminates de calcium (« Calcium Sulfoaluminate Cernent » - CSA, en terminologie anglosaxonne). Comme cela sera montré dans la suite, cette formulation permet d'atteindre des performances mécaniques identiques au ciment Portland (classe C 25/30) tout en réduisant de 30 à 85% les émissions de gaz à effet de serre, et plus généralement d'environ 50 %.

En outre, la présence d'une matrice argileuse crue permet un meilleur transfert hygrothermique et donc de meilleures propriétés rafraichissantes de la construction utilisant un liant issu de cette formulation.

### Selon d'autres caractéristiques optionnelles de la formulation :

- la matrice argileuse crue comporte au moins une espèce minérale sélectionnée parmi : Kaolinite, Illite, Smectite, Bentonite, Chlorite, Montmorillonite, Muscovite, Hallocyte, Sepiolite, Attapulgite, Vermiculite et les argiles dites interstratifiées qui sont des combinaisons complexes de plusieurs argiles. La présence d'une ou de plusieurs de ces espèces minérales dans la formulation du liant permet d'obtenir un ciment et plus largement un matériau construction présentant de bonnes propriétés mécaniques, soit des propriétés mécaniques équivalentes aux propriétés mécaniques d'un matériau construction comportant du ciment Portland. De préférence, la matrice argileuse crue comporte au moins une espèce minérale sélectionnée parmi : Kaolinite, Illite, Smectite et Bentonite.
- elle comprend au moins 80 % en poids de matrice argileuse crue, de préférence entre 80 et 99,5 % en poids, de façon plus préférée entre 90 et 99 % en poids. Une telle quantité de matrice argileuse crue permet d'améliorer les propriétés mécaniques des matériaux construits à partir de cette formulation.
- l'agent de défloculation est sélectionné parmi :
   - un surfactant non-ionique tel qu'un éther de polyoxyéthylène,
   - un agent anionique tel qu'un agent anionique sélectionné parmi : des sulfonates d'alkylaryle, des aminoalcool, des carbonates, des silicates, des acides gras, des humates (e.g. humates de sodium), des acides carboxyliques, des lignosulfonates (e.g. lignosulfonates de sodium), des polyacrylates, des phosphates ou polyphosphates tels que l'hexamétaphosphate de sodium, le tripolyphosphate de sodium, l'orthophosphate de sodium, des carboxyméthylcelluloses et leurs mélanges ;
   - un polyacrylate tel qu'un polyacrylate sélectionné parmi du polyacrylate de sodium ou du polyacrylate d'ammonium ;
   - une amine telle qu'une amine sélectionnée parmi : les 2-amino-2-methyl-1-propanol ; mono-, di- or triethanolamine ; les isopropanolamines (1-Amino-2-propanol, diisopropanolamine et triisopropanolamine) et les éthanolamines N-alkylées ; ou
   - leurs mélanges.
   Ces agents de défloculation permettent une bonne dispersion des argiles et sont adaptés aux matrices argileuses pouvant être utilisées en construction.
- l'agent de défloculation représente au moins 0,5 % en poids de la matrice argileuse crue, de préférence entre 0,5 et 20 % en poids de la matrice argileuse crue, de façon plus préférée entre 1 et 10 % en poids. Une telle concentration permet d'améliorer les propriétés mécaniques des matériaux construits à partir de cette formulation.
- elle comprend :
   ∘ de 80 % à 99,5 % en poids de matrice argileuse crue, et
   ∘ de 0,5 % à 20 % en poids d'agent de défloculation.
   Une telle formulation pour liant de construction permet, dans le cas où une telle formulation est utilisée en couplage avec une composition d'activation, d'obtenir des propriétés mécaniques équivalentes à du ciment Portland.

L'invention porte en outre sur **un liant de construction** comportant les constituants de la formulation pour liant de construction selon l'invention et une composition d'activation.

En particulier, l'invention porte en outre sur un liant de construction comportant une matrice argileuse crue, un agent de défloculation et une composition d'activation, caractérisé en ce qu'il comprend au moins 30 % en poids de matrice argileuse crue.

La composition d'activation permet de conférer au liant de construction ses propriétés mécaniques d'intérêt et notamment de structurer les feuillets d'argile.

### Selon d'autres caractéristiques optionnelles du liant de construction :

- le liant de construction comporte moins de 30% en poids de métakaolin, de préférence moins de 26% en poids de métakaolin, de façon plus préférée moins de 21% en poids de métakaolin, moins de 17% en poids de métakaolin, moins de 13% en poids de métakaolin, de façon encore plus préférée moins de 10% en poids de métakaolin, moins de 5% en poids de métakaolin. Par exemple, il peut ne pas comporter de métakaolin.
- la matrice argileuse crue comporte au moins une espèce minérale sélectionnée parmi : Kaolinite, Illite, Smectite, Bentonite, Chlorite, Montmorillonite, Muscovite, Hallocyte, Sepiolite, Attapulgite, Vermiculite et les argiles dites interstratifiées qui sont des combinaisons complexes de plusieurs argiles.
- la matrice argileuse crue comporte au moins une espèce minérale sélectionnée parmi : Kaolinite, Illite, Smectite, Bentonite, Chlorite, Montmorillonite, Muscovite, Hallocyte, Sepiolite, Attapulgite, Vermiculite et les argiles dites interstratifiées qui sont des combinaisons complexes de plusieurs argiles.
- Il comprend au moins 40 % en poids de matrice argileuse crue.
- l'agent de défloculation est sélectionné parmi :
   - un surfactant non-ionique tel qu'un éther de polyoxyéthylène ;
   - un agent anionique tel qu'un agent anionique sélectionné parmi : des sulfonates d'alkylaryle, des aminoalcool, des carbonates, des silicates, des acides gras, des humates (e.g. humates de sodium), des acides carboxyliques, des lignosulfonates (e.g. lignosulfonates de sodium), des polyacrylates, des phosphates ou polyphosphates tels que l'hexamétaphosphate de sodium, le tripolyphosphate de sodium, l'orthophosphate de sodium, des carboxyméthylcelluloses et leurs mélanges ;
   - un polyacrylate tel qu'un polyacrylate sélectionné parmi du polyacrylate de sodium ou du polyacrylate d'ammonium ;
   - une amine telle qu'une amine sélectionnée parmi : les 2-amino-2-methyl-1-propanol ; mono-, di- or triethanolamine ; les isopropanolamines (1-Amino-2-propanol, diisopropanolamine et triisopropanolamine) et les éthanolamines N-alkylées ; ou
   - leurs mélanges.
- l'agent de défloculation représente au moins 0,25 % en poids du liant de construction.
- la composition d'activation représente au moins 10 % en poids du liant de construction.
- la matrice argileuse crue, l'agent de défloculation et la composition d'activation forment un système bi-composant ou multi composants.
- il comprend :
   - de 30 % à 80 % en poids de matrice argileuse crue,
   - de 0,25 % à 20 % en poids de d'agent de défloculation, et
   - de 10 % à 50 % en poids d'une composition d'activation.
- la composition d'activation est une composition d'activation alkaline. La composition alcaline peut par exemple comporter un composé présentant un pKa supérieur ou égal à 10, de façon plus préférée supérieur ou égal à 12, de façon encore plus préférée sensiblement égal à 14.
- la composition d'activation comporte un composé organophosphoré tel que le tripolyphosphate de sodium, de préférence le composé organophosphoré représente au moins 2% en poids du liant de construction.
- il comporte au moins 2 % en poids d'oxydes métalliques. En particulier, la composition d'activation comporte des oxydes métalliques. En particulier, les oxydes métalliques sont présents à une teneur d'au moins 2 % en poids de la composition, de préférence d'au moins 5 % en poids de la composition, de façon encore plus préférée d'au moins 10% en poids de la composition. Une telle concentration permet d'améliorer les propriétés mécaniques des matériaux construits à partir de cette formulation.
- les oxydes métalliques sont sélectionnés parmi : des oxydes de fer tels que FeO, Fe₃O₄, Fe₂O₃, l'alumine Al₂O₃, l'oxyde de manganèse(II) MnO, l'oxyde de titane(IV) TiO₂ et leurs mélanges.
- la composition d'activation comporte du ciment, de préférence du ciment Portland. Le ciment peut par exemple être un ciment de type CEM I.
- il comporte une composition de laitiers de hauts fourneaux, de préférence la composition de laitiers de hauts fourneaux représente au moins 5% en poids du liant de construction.
- il comprend :
   - de 40 % à 70 % en poids de matrice argileuse crue,
   - de 0,5 % à 6 % en poids d'agent de défloculation,
   - de 5 % à 20 % en poids d'une composition d'activation, et
   - de 20 % à 45 % en poids de laitiers de hauts fourneaux.
- Il comprend :
   - de 35 % à 65 % en poids de matrice argileuse crue,
   - de 0,5 % à 5 % en poids d'agent de défloculation,
   - de 31 % à 49 % en poids de ciment Portland CEM1.
- il comprend :
   - de 35 % à 65 % en poids de matrice argileuse crue,
   - de 0,5 % à 5 % en poids d'agent de défloculation,
   - de 10 % à 30 % en poids de laitiers de hauts fourneaux, et
   - de 15 % à 35 % en poids de ciment Portland CEM1.
- il comprend :
   - de 45 % à 70 % en poids de matrice argileuse crue,
   - de 0,5 % à 6 % en poids d'agent de défloculation,
   - de 10 % à 35 % en poids d'une composition d'activation, et
   - de 15 % à 30 % en poids de métakaolin.
- il comprend :
   - de 45 % à 70 % en poids de matrice argileuse crue,
   - de 0,5 % à 5 % en poids d'agent de défloculation,
   - de 10 % à 25 % en poids d'une composition d'activation,
   - de 5 % à 20 % en poids de laitiers de hauts fourneaux, et
   - de 15 % à 30 % en poids de métakaolin.
Ces quantités permettent d'obtenir des propriétés mécaniques équivalente à du ciment Portland tout en présentant une empreinte carbone bien plus faible.

L'invention porte en outre sur un **procédé de préparation d'un liant de construction.**

Le procédé de préparation d'un liant de construction peut comporter une étape de mélange d'une matrice argileuse crue, d'un agent de défloculation et d'une composition d'activation, ledit liant de construction comportant au moins 30 % en poids de matrice argileuse crue.

En particulier, le procédé de préparation d'un liant de construction peut en particulier comporter les étapes suivantes :
- Préparer une suspension d'argile comportant au moins une matrice argileuse crue, un agent de défloculation et de l'eau,
- Ajouter une composition d'activation à la suspension d'argile, ladite composition d'activation pouvant être une composition d'activation alcaline et/ou comporter des oxydes métalliques, et
- Mélanger de façon à obtenir un liant de construction, de préférence ledit liant de construction comportant au moins 30 % en poids de matrice argileuse crue.

### Selon d'autres caractéristiques optionnelles du procédé :

- il comporte une étape de mélange de la suspension d'argile de façon à obtenir une suspension d'argile défloculée et la composition d'activation est ajoutée après l'étape de mélange.
- le liant de construction comprend au moins 50 % en poids de matrice argileuse crue, de préférence entre 50 et 80 % en poids. Il peut aussi comprendre au moins 40 % en poids de matrice argileuse crue, de préférence entre 40 et 60 % en poids de matrice argileuse crue.
- l'agent de défloculation représente au moins 0,25 % en poids du liant de construction, de préférence au moins 0,5 % en poids du liant de construction, de façon plus préférée entre 0,5 % et 10 % en poids du liant de construction.
- la composition d'activation est présente à une teneur d'au moins 10 % en poids de liant. Par exemple, des oxydes métalliques sont présents à une teneur d'au moins 10 % en poids de liant.

L'invention porte en outre sur un matériau de construction tel qu'un mortier, un enduit, un plâtre, un isolant, un béton allégé, un élément de préfabrication, comprenant le liant de construction selon l'invention.

### Selon d'autres caractéristiques optionnelles du matériau de construction :

- le liant de construction comprend de la terre excavée, ladite terre excavée comportant la matrice argileuse crue. En effet, contrairement aux matériaux de constructions connues, il est possible dans le cadre de l'invention de réaliser un liant de construction, et donc par extension un matériau de construction, directement à partir de terre excavée et présentant une résistance à la compression satisfaisante. La terre excavée peut comprendre en outre des granulats, tels qu'à titre d'exemples non limitatifs du sable, et/ou des graviers.
- il comprend en outre une ou plusieurs charges, les charges étant par exemple choisies parmi des charges minérales ou des charges végétales. Les charges peuvent être toutes charges connues de l'homme du métier dans le domaine des matériaux de construction. En particulier elles peuvent être sélectionnées parmi des granulats recyclés ou non, des poudres, du sable, des gravillons, des graviers, et/ou des fibres. Les fibres peuvent être en particulier des fibres d'origine végétale telles que la sciure, les copeaux et fibres de bois, la paille, le lin, la perlite, le liège ou encore la chènevotte. De façon préféré, le matériau de construction selon l'invention comprend en outre des fibres d'origine végétale.
- il comporte des pigments.
- il comprend en outre un agent expansif ou moussant, tel que de la poudre d'aluminium.

Selon un autre aspect, l'invention porte sur l'utilisation du liant de construction selon l'invention, pour la réalisation d'éléments de revêtement, en particulier des revêtements de sols, tels que des carreaux, dalles, pavés ou bordures, des revêtements de murs, tels que des éléments de façade intérieures ou extérieures, des plaquettes de parement, des éléments de bardage, ou des revêtements de toitures de type tuiles, pour la réalisation de modules de construction extrudés ou moulés, telles que des briques, ou pour la réalisation de formes extrudées variées.

L'invention porte sur l'utilisation du liant de construction selon l'invention, pour la réalisation de matériaux composites, tels que des panneaux de construction de type panneaux préfabriqués, de blocs préfabriqués tels que des linteaux de porte ou de fenêtre, des éléments de murs préfabriqués, ou tout autre élément de construction préfabriqué.

L'invention porte sur l'utilisation du liant de construction selon l'invention, pour la réalisation de modules d'isolation, tels que des panneaux de cloisons, ou des modules de construction isolants légers (de masse volumique inférieure à 1,5 kg/L, de préférence inférieure à 1,2 kg/L, de préférence encore inférieure à 1,0 kg/L, de préférence encore inférieure à 0,7 kg/L)

L'invention porte sur l'utilisation du liant de construction selon l'invention, pour la réalisation par fabrication additive, telle qu'au moyen d'une imprimante 3D, d'éléments de construction, de bâtiments ou de maisons, ou d'objets de décoration.

L'invention porte sur l'utilisation du liant de construction selon l'invention sous la forme d'un système bi-composant avec soit d'une part les constituants sous forme solide, et d'autre part les constituants sous forme liquide, soit les constituants sous la forme de deux pâtes, pour la réalisation de mastic, colle ou mortier de scellement.

L'invention porte en outre sur l'utilisation, pour la préparation d'un liant de construction, d'un agent de défloculation en combinaison avec une matrice argileuse crue, ladite matrice argileuse crue représentant au moins 30 % en poids du liant de construction, et une composition d'activation permettant d'obtenir un béton présentant une résistance minimale à la compression sur cylindres à 28 jours telle que mesurée par la norme NF EN 206-1 supérieure ou égale à 20MPa, de préférence supérieure ou égale à 25MPa, de préférence supérieure ou égale à 40 MPa.

D'autres avantages et caractéristiques de l'invention apparaitront à la lecture de la description suivante donnée à titre d'exemple illustratif et non limitatif, en référence à la Figure annexée :

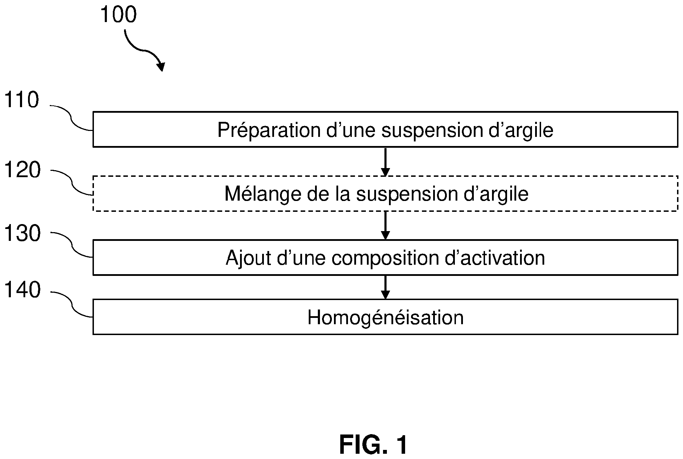

La figure 1 représente un schéma du procédé de préparation d'un liant de construction selon l'invention.

### [Description de l'invention]

Dans la suite de la description, le terme « % en poids » en lien avec la matrice argileuse crue, la formulation, le liant ou le matériau de construction doit être compris comme étant une proportion par rapport au poids sec de la formulation, du liant ou du matériau de construction. Le poids sec correspond au poids avant l'addition d'eau par exemple nécessaire à la formation d'un liant de construction.

Le terme « Déshydratée » au sens de l'invention correspond à une formulation comportant une quantité d'eau réduite et par exemple une teneur en eau inférieure à 20 % en poids, de préférence inférieure à 10 %, de façon plus préférée inférieure à 5 % et par exemple inférieure à 1 % en poids. La teneur en eau peut être mesurée par toute méthode connue de l'état de la technique. Elle peut par exemple être mesurée selon la norme NF P 94 050 de septembre 1995 « Détermination de la teneur en eau pondérale des matériaux : Méthode par étuvage ».

On entend par « matrice argileuse », un ou plusieurs matériaux rocheux à base de silicates ou d'aluminosilicates hydratés de structure lamellaire, ladite matrice argileuse étant composée de particules fines provenant en général de l'altération de silicates à charpente tridimensionnelle, tels que les feldspaths. Une matrice argileuse peut ainsi comporter un mélange de tels matériaux rocheux pouvant par exemple consister en de la kaolinite, de l'illite, de la smectite, de la bentonite, de la chlorite, de la vermiculite, de la metakaolin ou leurs mélanges. L'expression « matrice argileuse crue » correspond au sens de l'invention à une matrice argileuse n'ayant pas subi d'étape de calcination. En particulier, c'est-à-dire qu'elle n'a fait l'objet d'aucun traitement thermique préalable. Par exemple, cela correspond à une matrice argileuse n'ayant pas subit une montée en température supérieure à 300°C, de préférence supérieure à 200°C et plus préférentiellement une température supérieure à 150°C. En effet, la matrice argileuse crue peut subir une étape de chauffage nécessitant une montée en température généralement de sensiblement égale ou inférieure à 150°C mais pas d'étape de calcination.

On entend par « agent défloculant » ou « agent de défloculation », tout composé, qui, en suspension aqueuse, va dissocier des agrégats et des colloïdes. Les agents défloculant ont par exemple été utilisés dans un contexte de forage ou d'extraction pétrolière pour rendre l'argile plus fluide et faciliter l'extraction ou le forage.

On entend par « composition d'activation », toute composition ayant pour fonction d'accélérer la formation d'une structure compacte, augmentant ainsi la résistance mécanique des matériaux incorporant une telle composition d'activation.

Le terme « sensiblement égale » au sens de l'invention correspond à une valeur variant de moins de 20 % par rapport à la valeur comparée, de préférence de moins de 10 %, de façon encore plus préférée de moins de 5 %.

L'inventeur a mis au point une nouvelle formulation pour un liant de construction qui pourrait être avantageusement, mais non limitativement, utilisée en remplacement du ciment Portland, de la chaux ou du CSA.

Une formulation selon l'invention et plus spécifiquement un liant de construction selon l'invention présentent l'avantage de posséder une empreinte carbone au moins deux fois plus basse que la plupart des liants de construction, ou liant hydraulique, les plus utilisés au monde aujourd'hui (i.e. Ciment Portland). En effet, un liant de construction selon l'invention est principalement constitué d'une matrice argileuse, aussi appelée matrice argileuse crue, n'ayant pas subi d'étape de calcination, étape énergivore générant en outre l'émission de gaz à effet de serre et plus particulièrement de dioxyde de carbone.

De plus, une formulation ou un liant de construction selon l'invention présentent un taux de clinker plus faible que des produits équivalents et permet, à propriétés mécaniques équivalentes, de réduire les émissions de CO₂ et les coûts de production.

Avantageusement, comme cela sera présenté dans les exemples, un liant de construction selon l'invention permet la fabrication de matériaux de construction présentant des propriétés mécaniques au moins équivalentes aux bétons formulés avec du ciment Portland ou des matériaux « bas carbone », tels que ceux décrits précédemment.

Ainsi, **selon un premier aspect,** l'invention porte sur une formulation pour liant de construction comportant, sous forme déshydratée, une matrice argileuse crue et un agent de défloculation.

Comme cela a été mentionné, l'utilisation d'une matrice argileuse crue permet de réduire l'impact environnemental du liant de construction.

Les agents de défloculation ont déjà été utilisés avec des argiles. C'est notamment le cas dans la poterie et la céramique où la préparation d'une barbotine à l'état liquide et non déshydratée peut comporter le mélange d'un agent de défloculation avec une matrice argileuse. Cette pratique permet de fluidiser l'argile pour n'en récupérer que les fines particules et n'est pas destinée à la préparation d'un liant de construction.

Ici, sans être limité par la théorie, l'agent de défloculation peut venir se positionner à l'interface des feuillets constituant la matrice argileuse crue et la déstructurer. Ainsi, l'utilisation d'un agent défloculant va permettre l'obtention, à partir de la matrice argileuse crue, d'une formulation comportant une matrice argileuse crue déstructurée et apte à former, en présence d'une composition d'activation, un liant de construction plus performant.

Une telle formulation peut être préparée *extemporanément* ou bien préparée sur un site de production puis éventuellement stockée puis transportée jusqu'au site de construction.

Ainsi, l'invention porte par exemple sur une formulation pour liant de construction, comportant une matrice argileuse crue et un agent de défloculation, qui est stockée et/ou transportée en attendant son mélange avec une composition d'activation permettant ainsi la formation d'un liant de construction. En particulier, la formulation peut être stockée dans des contenants d'une contenance de 0,5 L à 50 L.

Nous allons présenter en détails les caractéristiques générales et préférées de chacun des constituants de la formulation selon l'invention.

### Matrice argileuse crue

La matrice argileuse crue peut par exemple comporter au moins une espèce minérale sélectionnée parmi : Kaolinite, Illite, Smectite, Bentonite, Chlorite et Vermiculite.

Le tableau 1 ci-dessous présente les caractéristiques chimiques de ces espèces minérales.

**[Tableau 1]**

| | **Type d'argile** | **Composition** |
|---|---|---|
| Matrice Argileuse Crue | Illite | (K,H₃O)(Al,Mg,Fe)₂(Si,Al)₄O₁₀[(OH)₂,(H₂O)] |
| | Smectite / Montmorillonite | (Na,Ca)_{0,3}(Al,Mg)₂Si₄O₁₀(OH)₂, n H₂O |
| | Kaolinite | Al₂Si₂O₅(OH)₄ |
| | Metakaolin | Al₂Si₂O₅(OH)₄ anhydre |
| | Bentonite | (Na,Ca)_{0,3}(Al,Mg)₂Si₄O₁₀(OH)₂ |

De façon préférée, une formulation selon l'invention comprend au moins 80 % en poids de matrice argileuse crue, de façon plus préférée au moins 90 % en poids de matrice argileuse crue. En effet, la formulation pour liant de construction selon l'invention présente l'avantage de pouvoir comporter une quantité élevée de matrice argileuse crue sans que cela ne vienne altérer les propriétés mécaniques des matériaux de construction permettant de réaliser des matériaux de construction avec des performances mécaniques adaptées.

En outre, de façon préférée, une formulation selon l'invention comprend au plus 98 % en poids de matrice argileuse crue, de façon plus préférée au plus 96 % en poids de matrice argileuse crue. En effet, la formulation pour liant de construction selon l'invention comporte également au moins un agent de défloculation limitant alors la proportion de matrice argileuse crue dans la formulation.

Ainsi, en particulier, une formulation selon l'invention peut comprendre entre 80 et 99,5 % en poids de matrice argileuse crue, de façon préférée entre 90 et 99 % en poids ou entre 80 et 98 % en poids de matrice argileuse crue, de façon plus préférée entre 85 et 97 % en poids de matrice argileuse crue, et de façon encore plus préférée entre 90 et 96 % en poids de matrice argileuse crue.

### Agent de défloculation

De nombreux composés peuvent faire office d'agents de défloculation et beaucoup sont généralement connus de l'homme du métier.

Dans le cadre de l'invention, l'agent de défloculation est en particulier un surfactant non-ionique tel qu'un éther de polyoxyéthylène. L'éther de polyoxyéthylène peut par exemple être sélectionné parmi : un éther de lauryl poly(oxyéthylène).

L'agent de défloculation peut aussi être un agent anionique tel qu'un surfactant anionique. En particulier, l'agent anionique peut être sélectionné parmi : des sulfonates d'alkylaryle, des aminoalcool, des carbonates, des silicates, des acides gras, des humates (e.g. humates de sodium), des acides carboxyliques, des lignosulfonates (e.g. lignosulfonates de sodium), des polyacrylates, des phosphates ou polyphosphates tels que l'hexamétaphosphate de sodium, le tripolyphosphate de sodium, l'orthophosphate de sodium, des carboxyméthylcelluloses et leurs mélanges.

L'agent de défloculation peut aussi être un polyacrylate. Il peut alors être sélectionné par exemple parmi du polyacrylate de sodium et du polyacrylate de d'ammonium.

L'agent de défloculation peut également être une amine sélectionnée par exemple parmi : les 2-amino-2-methyl-1-propanol ; mono-, di- or triethanolamine ; les isopropanolamines (1-Amino-2-propanol, diisopropanolamine et triisopropanolamine) et N-alkylated ethanolamines. L'agent de défloculation peut aussi être un silicate tel que le silicate de sodium, le métasilicate de sodium ou le trisilicate de sodium.

Alternativement, l'agent de défloculation peut être un mélange de composés, tel qu'un mélange comportant au moins deux composés sélectionnés parmi : surfactant non-ionique, agent anionique, polyacrylate, amine et composé organophosphoré.

En particulier, l'agent de défloculation peut être un mélange de silicate de sodium et de carbonate de sodium.

De façon préférée, l'agent de défloculation est sélectionné parmi : un lignosulphonate (e.g. lignosulphonate de sodium), un polyacrylate, un humate et leurs mélanges.

L'agent de défloculation est de préférence sous forme d'un sel.

Cependant, l'invention ne saurait se limiter aux agents défloculants cités précédemment, tout type d'agent défloculant connu par l'homme du métier peut être utilisé en lieu et place desdits agents défloculant cités précédemment.

En particulier, l'agent de défloculation représente au moins 0,5 % en poids de la matrice argileuse crue, de préférence au moins 1 % en poids de la matrice argileuse crue, de façon plus préférée au moins 2 % en poids de la matrice argileuse crue, de façon encore plus préférée au moins 3 % en poids en poids de la matrice argileuse crue, et par exemple au moins 4 % en poids en poids de la matrice argileuse crue. En effet, avec de telles concentrations en agent de défloculation, la formulation pour liant selon l'invention peut ensuite être utilisée en combinaison avec une composition d'activation pour former un matériau aux propriétés mécaniques avantageuses.

En outre, l'agent de défloculation représente au plus 20 % en poids de la matrice argileuse crue, de préférence au plus 10 % en poids de la matrice argileuse crue. En effet, une concentration trop élevée n'est pas nécessaire pour former un matériau aux propriétés mécaniques avantageuses.

En particulier, l'agent de défloculation représente entre 0,5 et 20 % en poids de la matrice argileuse crue, de façon préférée entre 1 et 10 % en poids de la matrice argileuse crue, de façon plus préférée entre 3 et 10 % en poids de la matrice argileuse crue et de façon encore plus préférée entre 4 et 10 % en poids de la matrice argileuse crue.

Selon un autre aspect, l'invention porte sur **un liant de construction** comportant les constituants de la formulation pour liant de construction selon l'invention et une composition d'activation.

C'est l'ajout de la composition d'activation, en lien avec la matrice argileuse crue et l'agent défloculant, qui va conférer au liant de construction ses propriétés mécaniques d'intérêt.

Le liant de construction peut avantageusement prendre la forme d'un système bi-composant multi-composants, c'est-à-dire comporter ses constituants, à savoir matrice argileuse crue, agent défloculant et composition d'activation, sous une forme juxtaposée.

En particulier, avant une étape de mélange nécessaire à l'utilisation effective du liant de construction, le liant de construction peut être préparé de façon à ce que la composition d'activation ne soit pas en contact avec la matrice argileuse crue et/ou l'agent de défloculation. Une telle caractéristique présente l'avantage de pouvoir améliorer la stabilité du liant de construction avant son utilisation.

Par exemple, le liant de construction peut correspondre à la combinaison d'un mélange correspondant à la formulation pour liant selon l'invention et d'une composition d'activation disposée dans un autre contenant. Dans un système bi-composant ou multi composants soit les constituants peuvent ne pas être tous sous une même forme (e.g. liquide, solide ou pâte) soit les constituants sont sous forme de pâte soit ils sont disposés dans différents contenants. Le liant de construction pourra juste avant son utilisation être additionné d'eau ou plus généralement d'une solution aqueuse permettant un mélange intime des constituants du liant de construction. Néanmoins, avant cette adjonction d'eau, il pourrait se présenter sous la forme d'un liant de construction étant au moins partiellement sous forme déshydratée.

Comme cela sera décrit ci-après, la composition d'activation peut être une composition liquide. Ainsi, le liant de construction peut être formé sans addition d'eau ou d'une solution aqueuse additionnelle.

Avantageusement, et comme cela sera détaillé, une partie des composants du liant de construction (agent de défloculation et matrice argileuse) peuvent être mélangés avec de l'eau avant l'ajout de la composition d'activation.

Néanmoins, le liant de construction peut également être préparé avantageusement sous forme déshydratée. Dans ce cas il pourra par exemple être mélangé à une solution aqueuse juste avant son utilisation. Ainsi, il est plus facilement transportable et son conditionnement en est facilité.

Sans être limité par la théorie, la composition d'activation va permettre la constitution d'un réseau entre les feuillets d'argile qui apportera ses propriétés mécaniques au liant de construction selon l'invention.

La composition d'activation est par exemple présente à une teneur d'au moins 10 % en poids du liant de construction, de façon préférée au moins 15 % en poids du liant de construction, de façon plus préférée au moins 20 % en poids du liant de construction, de façon encore plus préférée au moins 25 % en poids du liant de construction, et par exemple au moins 30 % en poids du liant de construction.

En outre, la composition d'activation peut représenter au plus 50 % en poids du liant de construction, de façon préférée au plus 45 % en poids du liant de construction, et de façon plus préférée au plus 40 % en poids du liant de construction.

En particulier, la composition d'activation peut représenter entre 10 et 50 % en poids du liant de construction, de préférence entre 15 et 50 % en poids du liant de construction.

De façon plus préférée, la composition d'activation représente entre 10 et 35 % en poids du liant de construction, de façon encore plus préférée entre 15 et 30 % en poids du liant de construction.

En particulier, la composition d'activation peut comporter des oxydes métalliques et/ou être une composition d'activation alcaline.

De façon préférée, les oxydes métalliques sont des oxydes de métaux de transition.

De façon plus préférée, les oxydes métalliques sont sélectionnés parmi : des oxydes de fer tels que FeO, Fe₃O₄, Fe₂O₃, l'alumine Al₂O₃, l'oxyde de manganèse (II) MnO, l'oxyde de titane(IV) TiO₂ et leurs mélanges.

Les oxydes métalliques peuvent de préférence provenir d'une composition de laitiers de hauts fourneaux par exemple formés lors de l'élaboration de la fonte à partir de minerai de fer.

Les oxydes métalliques sont présents à une teneur d'au moins 2 % en poids du liant de construction, de préférence d'au moins 5 % en poids du liant de construction, de façon plus préférée d'au moins 10 % en poids du liant de construction.

Lorsque la composition d'activation est une composition d'activation alkaline. La composition alcaline peut de préférence comporter un composé présentant un pKa supérieur ou égal à 10, de façon plus préférée supérieur ou égal à 12, de façon encore plus préférée sensiblement égal à 14. Elle peut alors être considérée comme étant une base forte.

En particulier, la composition d'activation peut comporter un mélange d'hydroxyde de sodium et de silicate de sodium. La composition d'activation peut être utilisée sous forme solide. Elle peut également être utilisée, par exemple dans le cas d'une composition d'activation alkaline, sous forme liquide. Dans ce cas le pourcentage indiqué pour les formulations correspond au poids de la composition liquide. La composition d'activation alkaline liquide peut quant à elle comporter entre 10 et 70 % d'un mélange d'hydroxyde de sodium et de silicate de sodium, de préférence entre 20 et 60%, de façon plus préférée entre 30 et 50%, en gramme de produit sec sur le poids total de la composition.

La composition alcaline, et plus largement la composition d'activation, peut par exemple comporter un composé organophosphoré tel que le tripolyphosphate de sodium désigné par l'acronyme NaTPP.

Avantageusement, la composition d'activation peut être une composition d'activation alkaline comportant en outre des oxydes métalliques. Comme cela sera montré dans les exemples, des liants de construction préparés à partir d'une telle composition d'activation présentent de bonnes propriétés mécaniques. Ainsi, de façon préférée, la composition d'activation peut comporter des oxydes métalliques et au moins un composé présentant un pKa supérieur ou égal à 10.

La composition d'activation peut être une composition aqueuse. Ainsi, elle peut comporter de préférence de l'eau. Comme cela sera décrit par la suite, son utilisation peut être combinée à l'ajout d'eau lors de la formation d'un liant de construction selon la présente invention. Néanmoins, alternativement, la composition d'activation se présente sous forme solide, par exemple sous forme de poudre.

De façon préférée, la **matrice argileuse crue** représente au moins 30 % en poids du liant de construction, de préférence au moins 40 % en poids du liant de construction, de façon préférée entre 40 et 80 % en poids, de façon encore plus préférée entre 45 et 65 % en poids, de façon encore plus préférée entre 50 et 60 % en poids.

De même, **l'agent de défloculation** peut représenter au moins 0,25 % en poids du liant de construction, de façon préférée au moins 0,5 % en poids du liant de construction, de façon plus préférée au moins 1 % en poids du liant de construction, de façon encore plus préférée au moins 1,5 % en poids du liant de construction, et par exemple au moins 2 % en poids du liant de construction.

En outre, l'agent de défloculation peut représenter au plus 20 % en poids du liant de construction, de façon préférée au plus 15 % en poids du liant de construction, et de façon plus préférée au plus 10 % en poids du liant de construction.

En particulier, l'agent de défloculation peut représenter entre 0,25 et 10 % en poids du liant de construction, de préférence entre 0,5 et 10 % en poids du liant de construction, de façon plus préférée entre 1 et 10 % en poids du liant de construction, entre 1 et 8 % en poids du liant de construction, entre 2 et 8 % en poids du liant de construction entre 2 et 5 % en poids du liant de construction. De façon encore plus préférée, l'agent de défloculation peut représenter entre 0,5 et 6 % en poids du liant de construction, entre 1 et 4 % en poids du liant de construction.

Dans un mode de réalisation particulier, un liant de construction conforme à l'invention comprend :
- de 30 % à 80 % en poids de matrice argileuse crue,
- de 0,25 % à 20 % en poids de d'agent de défloculation, et
- de 10 % à 50 % en poids d'une composition d'activation.
De façon préférée, un liant de construction conforme à l'invention comprend :
- de 45 % à 60 % en poids de matrice argileuse crue,
- de 0,25 % à 5 % en poids de d'agent de défloculation, de préférence 1 % à 4%, et
- de 10 % à 50 % en poids d'une composition d'activation
De façon préférée, un liant de construction conforme à l'invention comprend :
- de 30 % à 80 % en poids de matrice argileuse crue,
- de 1 % à 10 % en poids de d'agent de défloculation, et
- de 10 % à 50 % en poids d'une composition d'activation.

De façon préférée, un liant de construction conforme à l'invention comprend :
- de 50 % à 75 % en poids de matrice argileuse crue,
- de 1 % à 10 % en poids d'agent de défloculation, et
- de 15 % à 50 % en poids d'une composition d'activation.
De façon plus préférée, un liant de construction conforme à l'invention comprend :
- de 50 % à 70 % en poids de matrice argileuse crue,
- de 2 % à 5 % en poids d'agent de défloculation, et
- de 15 % à 45 % en poids d'une composition d'activation.
De façon plus préférée, un liant de construction conforme à l'invention comprend :
- de 50 % à 60 % en poids de matrice argileuse crue,
- de 2 % à 5 % en poids d'agent de défloculation, et
- de 25 % à 45 % en poids d'oxydes métalliques.
De façon encore plus préférée, un liant de construction conforme à l'invention comprend :
- de 30 % à 80 % en poids de matrice argileuse crue,
- de 1 % à 10 % en poids d'agent de défloculation,
- de 10 % à 40 % en poids d'oxydes métalliques, et
- de 2 % à 15 % en poids d'une base forte.

Outre la matrice argileuse crue, l'agent de défloculation et la composition d'activation, le liant de construction peut contenir des métakaolin flashés ou non flashés, du ciment, de la chaux et/ou du plâtre. De plus, comme cela sera illustré dans les exemples, certaines compositions de liant de construction peuvent présenter des performances mécaniques équivalentes ou supérieur au ciment Portland. Ainsi, de façon encore plus préférée, un liant de construction conforme à l'invention comprend :
- de 45 % à 70 % en poids de matrice argileuse crue,
- de 0,5 % à 6 % en poids d'agent de défloculation,
- de 10 % à 35 % en poids d'une composition d'activation, et
- de 15 % à 30 % en poids de métakaolin.
De façon encore plus préférée, un liant de construction conforme à l'invention comprend :
- de 35 % à 65 % en poids de matrice argileuse crue,
- de 0,5 % à 5 % en poids d'agent de défloculation,
- de 10 % à 30 % en poids de laitiers de hauts fourneaux, et
- de 15 % à 35 % en poids de ciment Portland CEM1.
De façon encore plus préférée, un liant de construction conforme à l'invention comprend :
- de 40 % à 70 % en poids de matrice argileuse crue,
- de 0,5 % à 6 % en poids d'agent de défloculation,
- de 5 % à 20 % en poids d'une composition d'activation, et
- de 20 % à 45 % en poids de laitiers de hauts fourneaux.
De façon encore plus préférée, un liant de construction conforme à l'invention comprend :
- de 45 % à 70 % en poids de matrice argileuse crue,
- de 0,5 % à 5 % en poids d'agent de défloculation,
- de 10 % à 25 % en poids d'une composition d'activation,
- de 5 % à 20 % en poids de laitiers de hauts fourneaux, et
- de 15 % à 30 % en poids de métakaolin.

Comme mentionné, les formulations ci-dessus sont des formulations ouvertes et le liant de construction peut comporter en outre des composés complémentaires tels que des plastifiants ou des réducteurs d'eau.

En outre, le rapport massique eau sur matières sèches de la composition dénommée ici liant de construction est contrôlé et est de préférence inférieure à 1, avantageusement sensiblement égale à 0,6.

**Selon un autre aspect,** l'invention porte sur un **procédé de préparation** d'un liant de construction. Un tel procédé selon l'invention, illustré à la **figure 1**, présente l'avantage d'être un procédé dit bas carbone, c'est-à dire dont les émissions en gaz à effet de serre, telles que notamment les émissions de dioxyde de carbone, sont réduites au regard des émissions de gaz à effet de serre des procédés de préparation des liants de construction connus. De telles réductions d'émissions de gaz à effet de serre sont notamment liées à l'absence d'une étape de calcination étant particulièrement énergivore.

Le procédé comporte en particulier la préparation 110 d'une suspension d'argile comportant au moins une matrice argileuse crue, un agent de défloculation et de l'eau. Comme précédemment, la matrice argileuse crue peut comporter au moins une espèce minérale sélectionnée parmi : Kaolinite, Illite, Smectite, Bentonite, Chlorite, Montmorillonite, Muscovite, Hallocyte, Sepiolite, Attapulgite, Vermiculite et les argiles dites interstratifiées qui sont des combinaisons complexes de plusieurs argiles. Avantageusement, l'étape de préparation 110 est initiée à partir d'un prémélange déshydraté comprenant une matrice argileuse crue et un agent de défloculation. Lors de l'étape de préparation 110 de la suspension, l'eau peut être ajoutée de façon à ce que le rapport entre la masse d'eau et la masse de liant de construction soit inférieur à 1 et par exemple compris entre 0,4 et 0,8. En outre, l'eau peut avantageusement être ajouté après que la matrice argileuse crue et l'agent de défloculation aient été mélangés à sec. Avantageusement, la matrice argileuse crue utilisée lors de l'étape de préparation 110 de la suspension d'argile peut provenir de terres excavées à proximité du site de construction. Ainsi, le procédé de préparation du liant de construction peut comporter une étape d'excavation de terre comportant une matrice argileuse crue préalablement à la préparation 110 d'une suspension d'argile. En outre, dans ce cas, le procédé peut comporter une étape de préparation de la terre excavée, ladite préparation pouvant par exemple comporter : séchage, broyage, tamisage, stockage.

Ainsi, la préparation de liant de construction selon l'invention peut permettre la préparation d'un béton de site réalisé au moins en partie à partir de matière première provenant du site de construction. De telles caractéristiques concourent encore à réduire l'empreinte environnementale du béton produit.

De façon préférée, le procédé selon l'invention peut comporter, suite à la préparation de la suspension d'argile, une étape 120 de mélange de la suspension d'argile de façon à obtenir une suspension d'argile dispersée ou défloculée.

Cette étape de mélange 120 de la suspension d'argile peut avantageusement mais non limitativement être réalisée dans un dispositif sélectionné parmi : un malaxeur et un camion toupie ou plus généralement au sein de tout dispositif adapté pour mélanger une suspension d'argile pour la réalisation d'un liant de construction, un dispositif de dispersion à l'aide d'ultrasons peut en outre être utilisé.

Cette étape de mélange 120 de la suspension d'argile, avant l'ajout de la composition d'activation, peut être réalisée sur une durée d'au moins 10 secondes, de préférence d'au moins 30 secondes, de façon plus préférée d'au moins 60 secondes.

En outre, cette étape de mélange 120 de la suspension d'argile, avant l'ajout de la composition d'activation, peut être réalisée sur une durée d'au plus 24 heures, de préférence d'au plus 12 heures, de façon plus préférée d'au plus 6 heures.

Le procédé comporte également une étape d'ajout 130 d'une composition d'activation à la suspension d'argile. Comme détaillé précédemment, la composition d'activation peut comporter des oxydes métalliques et/ou être une composition d'activation alcaline.

Le procédé comporte une étape 140 d'homogénéisation, ou de mélange, de façon à obtenir un liant de construction.

Avant, concomitamment ou après l'ajout de la composition d'activation, le procédé selon l'invention peut comporter l'ajout d'additifs ou de matériaux permettant de modifier les propriétés mécaniques du matériau de construction final.

Les matériaux ajoutés peuvent par exemple être des granulats recyclés ou non, choisis parmi les fillers, des poudres, du sable, des gravillons, des graviers, et/ou des fibres, et éventuellement des pigments.

Le procédé peut également comporter l'ajout d'un plastifiant. Le plastifiant peut par exemple être un polyacrylate, un polynaphtalènes sulfonate, un polycarboxylate, ou un polyphosphonate.

Le procédé peut également comporter l'ajout de fibres. Les fibres sont par exemple sélectionnées parmi : des fibres végétales telles que des fibres de coton de lin, de chanvre, de cellulose, de bambou, de miscanthus, des fibres synthétiques telles que des fibres métalliques, de verre, de carbone, de polypropylène et leurs mélanges. La présence de fibres peut permettre la formation d'un matériau de construction aux propriété mécaniques et isolantes améliorées.

Le procédé peut également comporter l'ajout d'agrégats. Les agrégats sont par exemple sélectionnés parmi : des graviers, du béton concassé, recyclé et leurs mélanges.

Le procédé peut également comporter l'ajout d'additif. L'additif est par exemple sélectionné parmi : un agent de maintien rhéologique synthétique ou naturel, un agent anti-retrait, un agent rétenteur d'eau, un agent entraîneur d'air, une résine synthétique et leurs mélanges.

La préparation d'un liant de construction selon l'invention comportera notamment l'ajout de sable et d'eau. Le sable peut éventuellement être issu des déblais notamment dans le cas de bétons de « site ». Le sable peut également être sable de désert.

Les matériaux de construction obtenus peuvent par exemple être sélectionnés parmi : des mortiers, des enduits, ou des plâtres.

Ainsi, **selon un autre aspect,** l'invention porte sur un **matériau de construction** formé à partir du liant de construction selon l'invention.

En outre, l'invention porte sur un liant de construction obtenu à partir du procédé selon l'invention. L'invention porte sur un matériau de construction obtenu à partir du procédé selon l'invention.

L'invention permet en particulier la fabrication de :
- matériau de construction isolant : à partir d'un liant de construction selon l'invention additionné de granulats légers de type « végétaux ou poreux » ;
- béton allégé : à partir d'un liant de construction selon l'invention additionné d'agent moussant type poudre d'aluminium. Cela va permettre de piéger de l'air dans le matériau et améliorer ces propriétés isolantes ;
- Eléments de préfabrication : fabrication de blocs ou plaques de bétons en usine à partir du liant de construction selon l'invention ; et
- Modules d'isolation.

Ainsi, l'invention porte également sur l'utilisation du liant de construction selon l'invention, pour la réalisation d'éléments de revêtement, pour la réalisation de modules de construction extrudés ou moulés, ou plus généralement pour la réalisation de formes extrudées variées.

Les éléments de revêtement peuvent par exemple être sélectionnée parmi des revêtements de sols, tels que des carreaux, dalles, pavés ou bordures, des revêtements de murs, tels que des éléments de façade intérieures ou extérieures, des plaquettes de parement, des éléments de bardage, ou des revêtements de toitures de type tuiles. Les modules de construction extrudés ou moulés, quant à eux, sont par exemple des briques.

L'invention porte également sur l'utilisation du liant de construction selon l'invention, pour la réalisation de matériaux composites, des blocs préfabriqués,

Les matériaux composites sont par exemple des panneaux de construction de type panneaux préfabriqués, tandis que les blocs préfabriqués sont par exemple des linteaux de porte ou de fenêtre, des éléments de murs préfabriqués, ou tout autre élément de construction préfabriqué.

L'invention porte également sur l'utilisation du liant de construction selon l'invention, pour la réalisation de modules d'isolation, tels que des panneaux de cloisons, ou des modules de construction isolants légers. Ces modules d'isolation présentent par exemple une masse volumique inférieure à 1,5 kg/L, de préférence inférieure à 1,2 kg/L, de façon plus préférée inférieure à 1,0 kg/L et de façon encore plus préférée inférieure à 0,7 kg/L.

L'invention porte également sur l'utilisation du liant de construction selon l'invention, pour la mise en œuvre d'une fabrication additive. En particulier, la mise en œuvre d'une fabrication additive peut être réalisée au moyen d'un système de construction en 3D automatisé tel qu'une imprimante 3D. Une telle fabrication additive peut permettre la fabrication d'éléments de construction, de bâtiments ou de maisons, ou encore d'objets de décoration.

Plus généralement, l'invention porte aussi sur l'utilisation, pour la préparation d'un liant de construction, d'un agent de défloculation en combinaison avec une matrice argileuse crue, ladite matrice argileuse crue représentant au moins 30 % en poids du liant de construction, et une composition d'activation permettant d'obtenir un béton présentant une résistance minimale à la compression à 28 jours telle que mesurée par la norme ISO 1920-4:2005 (Essais du béton - Partie 4: Résistance du béton durci) supérieure ou égale à 20MPa, de préférence supérieure ou égale à 25MPa, de préférence supérieure ou égale à 40 MPa.

L'invention porte aussi sur l'utilisation, pour la préparation d'un liant de construction, d'un agent de défloculation en combinaison avec une matrice argileuse crue, ladite matrice argileuse crue représentant au moins 30 % en poids du liant de construction, et une composition d'activation permettant d'obtenir un béton présentant une résistance minimale à la compression à 28 jours telle que mesurée par la norme NF EN 197-1 supérieure ou égale à 20MPa, de préférence supérieure ou égale à 25MPa, de préférence supérieure ou égale à 40 MPa.

Comme cela est illustré par les exemples ci-après, la présente invention fournit une solution basée sur un mélange de matrice argileuse crue, d'agent défloculant et de composition d'activation pour proposer un liant de construction aux propriétés mécaniques similaire au standard tout en présentant une empreinte carbone réduite.

### EXEMPLES :

### Préparation d'un liant de construction :

Dans tous les exemples présentés ci-après, les formulations selon l'invention sont préparées selon un protocole identique, à savoir qu'un prémélange à sec est réalisé entre une matrice argileuse crue et un agent défloculant dans des quantités prédéterminées, puis de l'eau est ajoutée et la solution est mélangée à basse vitesse, c'est-à-dire sensiblement à six cents tours par minute pendant trente secondes. Ensuite, une composition d'activation est ajoutée au prémélange puis le prémélange est mélangé à grande vitesse, c'est-à-dire à environ mille cinq cents tours par minute pendant trois minutes.

Le rapport massique eau sur matières sèches de la composition (aussi appelée liant de construction) est ajusté à une valeur sensiblement égale à 0,6.

Le liant de construction ainsi formé est ensuite coulé dans un moule puis laissé à maturation à température ambiante, c'est-à-dire environ 20 degrés Celsius pendant vingt-huit jours.

### Méthodologie de mesure des propriétés mécaniques des liants de construction :

Une fois la maturation terminée, la résistance mécanique est mesurée. On entend par résistance mécanique d'un liant de construction, sa résistance à la compression, une telle compression étant mesurée selon la norme NF EN 196-1, pour un prisme de 40 millimètres de côté et 160 millimètres de longueur et est exprimée en Méga Pascal (MPa).

### Comparaison des liants de construction selon l'invention aux liants de construction connus :

Le tableau 2 ci-dessous présente, pour différents types de liants de construction, des formulations connues et une formulation selon l'invention. La masse des composants relatifs à chaque formulation est exprimée en pourcentage de la masse totale du liant de construction (poids sec).

**[Tableau 2]**

| | **Formulations** | | | |
|---|---|---|---|---|
| | **Liant CEM1 (Référence)** | **HP2A1 (Référence)** | **CMT (Référence)** | **MUP1** |
| Matrice Argileuse Crue | 0,0% | 0,0% | 75,0% | 55,0% |
| Agent Défloculant | 0,0% | 0,0% | 0,0% | 3,0% |
| Composition d'activation | 0,0% | 65,0% | 10,0% | 42,0% |
| Metakaolin | 0,0% | 35,0% | 0,0% | 0,0% |
| Ciment CEM1 | 100,0% | 0,0% | 15,0% | 0,0% |
| Résistance à la Compression (MPa) | 45 | 42 | <10 | **45** |
| Empreinte Carbone estimée | Forte | Moyenne | Moyenne | **Faible** |

Ainsi, le tableau 2 présente les résistances mécaniques de liants de construction connues **(Liant CEM1, HP2A1, CMT)** et ne faisant pas partie de l'invention, tel que le liant de construction de type CEM1 plus connu sous la dénomination de ciment « Portland » dont la résistance à la compression est de l'ordre de 45 MPa.

La formulation HP2A1 peut être obtenue en suivant les enseignements de la demande de brevet FR3034094. Le liant de construction de type HP2A1 comprend 35% en poids de Metakaolin obtenu par calcination de kaolin, 65 % en poids d'une composition d'activation. Ainsi la résistance mécanique relative à un tel liant de construction, de l'ordre de 42 MPa, est inférieure à la résistance du liant de construction de type Portland.

Enfin, le liant de construction CMT, obtenu en suivant les enseignements de la demande de brevet FR3016376, comprend 75% en poids de matrice argileuse crue, 10 % en poids d'une composition d'activation comprenant notamment de la chaux et 15% en poids de ciment de type Portland. La résistance mécanique associée à un tel liant comportant une majorité de matrice argileuse crue est de l'ordre de 25 MPA d'après la demande de brevet FR3016376 et présenterait donc une résistance à la compression sensiblement inférieure celle des liants de construction de type Portland ou HP2A1. Néanmoins une reproduction de ces essais par la demanderesse n'a pas permis d'obtenir de résistance égale ou supérieure à 10 MPa. Ainsi, en présence d'une forte concentration en matrice argileuse crue et en absence d'agent de défloculation, un liant de construction ne permettra pas d'obtenir de béton aux propriétés mécaniques adéquates.

Le tableau 2 présente également une formulation MUP1 selon l'invention. Il est important de noter que cette formulation comportant 3 % d'agent défloculant, bien que comportant une majorité de matrice argileuse crue (55 %), **présente une résistance mécanique identique à la résistance mécanique du ciment Portland.**

### Importance de l'agent défloculant

Le tableau 3 ci-dessous présente une formulation connue HP2A_X02 et trois formulations selon l'invention MUP2, MUP S9-1 et MUP S10-1.

**[Tableau 3]**

| | **Formulations** | | | |
|---|---|---|---|---|
| | **HP2A2 (Référence)** | **MUP2** | **MUPS9-1** | **MUPS10-1** |
| Matrice Argileuse Crue | 54% | 51% | 51% | 60% |
| Agent Défloculant | 0% | **3%** | **1,5%** | **1,0%** |
| Composition d'activation | 23% | 16% | 21% | 19% |
| Metakaolin | 18% | 20% | 19,5% | 20% |
| LHF | 5% | 10% | 7% | 0% |
| Résistance à la Compression (MPa) | 27 | **43** | **46** | **40** |

Le liant de construction de type HP2A2 comprend 54 % en poids de matrice argileuse crue, 23 % en poids d'une composition d'activation (solution silicate alcaline et/ou NaTPP), 18% en poids de metakaolin et 5% de LHF. Une telle formulation peut en particulier être dérivée de l'enseignement de la demande de brevet FR3034094. La résistance mécanique associée à un tel liant est de l'ordre de 27 MPa.

Au contraire, le liant MUP2 obtenu selon l'invention et comportant une composition similaire à l'exception de la présence d'un agent défloculant à 3 % présente une résistance mécanique de 43 MPa. Une telle résistance peut être considérée comme équivalente à celle d'un Ciment Portland.

De même, le liant MUPS9-1 obtenu selon l'invention et comportant une composition similaire à l'exception de la présence d'un agent défloculant à 1,5 % présente une résistance mécanique de 46 MPa. Une telle résistance peut être considérée comme équivalente à celle d'un Ciment Portland.

Ces résultats confirment la pertinence d'un liant de construction selon l'invention et mettent en exergue l'avantage conféré sur la résistance à la compression par la présence d'oxydes métalliques par exemple issus de laitiers de hauts fourneaux.

Le tableau 4A ci-dessous présente la formulation selon l'invention déjà présentée MUP1 et une formulation équivalente à laquelle l'agent défloculant n'a pas été ajouté.

**[Tableau 4A]**

| | **Formulations** | |
|---|---|---|
| | **MUP1** | **CMT2** (**Référence**) |
| Matrice Argileuse Crue | 55,0% | 57,1% |
| Agent Défloculant | **3,0%** | 0,0% |
| Composition d'activation | 42% | 42,9% |
| Résistance à la Compression (MPa) | **45** | <10 |

Cette comparaison montre qu'une formulation selon l'invention peut atteindre une résistance mécanique de 45 MPa alors que la même formulation sans agent défloculant (CMT2) ne présente, d'après la demande de brevet FR3016376, qu'une résistance mécanique de 25 MPa. En outre, comme précédemment, une reproduction de ces essais par la demanderesse n'a pas permis d'obtenir de résistance égale ou supérieure à 10 MPa pour l'essai CMT2. Ainsi, en présence d'une forte concentration en matrice argileuse crue, et en absence d'agent de défloculation, un liant de construction ne permettra pas d'obtenir de béton aux propriétés mécaniques adéquates. Comme décrit précédemment, la présence d'un agent défloculant en combinaison avec la matrice argileuse crue et la composition d'activation permet d'améliorer la résistance mécanique d'un liant de construction.

Le tableau 4B ci-dessous présente les formulations selon l'invention MUPS8-1 et MUPS12-1 en comparaison de formulations de référence dans lesquelles l'agent défloculant n'a pas été ajouté.

**[Tableau 4B]**

| | **Formulations** | | | |
|---|---|---|---|---|
| | **MUPS8-1** | **MUPS8-2 (Référence)** | **MUPS12-1** | **MUPS11-3 (Référence** |
| Matrice Argileuse Crue | 53,0% | 51% | 51% | 51% |
| Agent Défloculant | **1,5%** | 0,0% | **1%** | 0% |
| Composition d'activation | 20,5% | 24% | 24% | 24% |
| Metakaolin | 25% | 25% | 24% | 25% |
| Ciment CEM1 | 0% | 0% | 0% | 0% |
| Résistance à la Compression (MPa) | **41** | 27 | **40** | 29 |

Cette comparaison montre qu'une formulation selon l'invention peut atteindre une résistance mécanique supérieure ou égale à 40 MPa alors que la même formulation sans agent défloculant (MUPS8-2 ou MUPS11-3) n'atteint pas une résistance mécanique de 30 MPa. Comme décrit dans les paragraphes précédents, la présence d'un agent défloculant en combinaison avec la matrice argileuse crue, la composition d'activation et éventuellement des métakaolin permet **d'améliorer la résistance mécanique d'un liant de construction ici de l'ordre de plus de 30 %.**

Le tableau 4C ci-dessous détaille la formulation de plusieurs liants de construction selon l'invention en comparaison avec des liant de référence (MUPS2-1 et MUPS2-2). Ces liants de construction diffèrent notamment en ce que les liants de construction selon l'invention comportent un agent défloculant.

**[Tableau 4C]**

| | **Formulations** | | | | |
|---|---|---|---|---|---|
| | MUPS2-1 (ref.) | MUPS2-2 (ref.) | MUPS3-1 | MUPS4-1 | MUPS5-1 |
| Matrice Argileuse Crue | 50,0% | 70,0% | 51,0% | 52,0% | 53,0% |
| Agent Défloculant | 0,0% | 0,0% | **2,0%** | **1,5%** | **3,0%** |
| Ciment CEM1 | 50,0% | 30,0% | 47,0% | 46,5% | 44,0% |
| Résistance à la Compression (MPa) | 8 | 3 | **25** | **30** | **33** |

Le tableau 4C montre que les formulations dans lesquelles c'est le ciment qui tient le rôle de composition d'activation.

Les formulations équivalentes dans lesquelles l'agent de défloculation a été retiré présentent des résistances mécaniques faibles et inadéquates.

Au contraire, une combinaison d'argile crue à une teneur supérieure ou égale à 50 % en combinaison avec du ciment et un agent de défloculation permet d'atteindre des résistances supérieures à 20 MPa. Il y a une multiplication par un facteur supérieur à trois des propriétés mécaniques obtenues.

### Utilisation d'une combinaison d'oxydes métalliques et d'une composition d'activation alkaline :

Le tableau 5 ci-dessous détaille la formulation de plusieurs liants de construction selon l'invention. Ces liants de construction diffèrent notamment en ce que certains comportent une composition d'activation alkaline (une solution avec du NaTPP en l'occurrence) et d'autres du ciment Portland.

**[Tableau 5]**

| | **Formulations** | | | | |
|---|---|---|---|---|---|
| | **MUP3** | **MUP4** | **MUP5** | **MUPS2-3** | **MUPS5-1** |
| Matrice Argileuse Crue | 54,6% | 54,0% | 51,3% | 55,0% | 60,0% |
| Agent Défloculant | 2,7% | 3,1% | 2,9% | 1,0% | 3,5% |
| LHF | **17,5%** | **31,9%** | **18,8%** | 0,0% | 0,0% |
| Composition d'activation (NaTPP + NaOH + Na2SiO3) | 0,0% | 11,0% | 0,0% | 0,0% | 0,0% |
| Ciment CEM1 | 25,2% | 0,0% | 27,0% | 44,0% | 36,5% |
| Résistance à la Compression (MPa) | **41** | **45** | **42** | 18 | 21 |

Le tableau 5 montre que les formulations comportant un mélange :
- de laitiers de haut fourneaux (LHF) qui comportent des oxydes métalliques et
- du sodium tripolyphosphate
présentent des résistances mécaniques à 45 MPa.

Les formulations équivalentes dans lesquelles la composition d'activation alkaline a été remplacée par du ciment CEM1 présentent des résistances mécaniques proches.

En outre, la composition MUPS5-1 ne comportant pas de LHF présente des valeurs de résistance à la compression acceptables mais plus faibles. Cette composition montre que grâce à la présente invention il est possible d'atteindre des valeurs de résistances mécanique supérieure à 20 MPa pour ces liants de construction comportant plus de 50 % de matrice argileuse crue.

### Formulation de béton à partir d'un liant de construction selon l'invention :

Le tableau 6 ci-dessous détaille la formulation de plusieurs bétons incluant un béton de référence formé à partir de ciment Portland (B-Portland) et des bétons formés à partir de liant de construction selon l'invention (MUP_BA1, MUP_BA2, MUP_BA3). Ces bétons diffèrent notamment par la nature de la matrice argileuse crue, par la nature de l'agent défloculant et par les compositions d'activation utilisées.

**[Tableau 6]**

| | | **B-Portland** | **MUP**_**BA1** | **MUP_BA2** | **MUP_BA3** |
|---|---|---|---|---|---|
| Ciment CEM I 52.5 N | g (%m / liant) | 240 (100%) | 84 (26%) | 0 | 0 |
| Argile | Nature | / | aquitaine | kaolinite | bentonite |
| | g (%m / liant) | 0 | 181 (55%) | 165 (50%) | 178 (54%) |
| Agent défloculant | Nature | / | humates de sodium | lignosulfonate de sodium | polyacrylate de sodium |
| | g (%m / liant) | 0 | 10 (3%) | 10 (3%) | 10 (3%) |
| Composition d'activation | Nature | / | LHF | LHF + NaOH+Na₂SiO₃ | LHF + NaTPP + NaOH + Na2SiO3 |
| | g (%m / liant) | 0 | 54 (16%) | 101 (31%) | 141 (43%) |
| Métakaolin | g (%m / liant) | 0 | 0 | 54 (16%) | 0 |
| Superplastifiant | Nature | Tempo12 | Tempo12 | Tempo12 | Tempo12 |
| | g | 1,9 | 2,64 | 2,64 | 2,64 |
| Sable 0-4 | g | 900 | 900 | 900 | 900 |
| Granulats 4-12 | g | 780 | 780 | 780 | 780 |
| Eau | g | 205 | 185 | 175 | 175 |
| **Résistance à la Compression (MPa)** | à 28 jours | 40 | 38 | 39 | 41 |

Comme montré par le tableau 6, les bétons selon l'invention présentent des résistances à la compression équivalentes aux résistances à la compression obtenues avec un béton formé avec du ciment Portland. Ainsi, la présente invention permet de former un liant de construction bas carbone, à partir de matrice argileuse crue, présentant des propriétés mécaniques suffisantes pour en faire un matériau de construction répondant à la majorité des besoins du secteur.

## Revendications

1. Formulation pour liant de construction comportant, sous forme déshydratée, une matrice argileuse crue et un agent de défloculation, l'agent de défloculation représentant au moins 0,5 % en poids de la matrice argileuse crue.

2. Formulation selon la revendication 1, **caractérisée en ce que** la matrice argileuse crue comporte au moins une espèce minérale sélectionnée parmi : Kaolinite, Illite, Smectite, Bentonite, Chlorite, Montmorillonite, Muscovite, Hallocyte, Sepiolite, Attapulgite, Vermiculite et les argiles dites interstratifiées qui sont des combinaisons complexes de plusieurs argiles.

3. Formulation selon l'une des revendications 1 ou 2, **caractérisée en ce que** la matrice argileuse crue comporte au moins une espèce minérale sélectionnée parmi : Kaolinite, Illite, Smectite, Bentonite, Chlorite et Vermiculite.

4. Formulation selon l'une quelconque des revendications 1 à 3, **caractérisée en ce qu'**elle comprend au moins 80 % en poids de matrice argileuse crue.

5. Formulation selon l'une quelconque des revendications 1 à 4, **caractérisée en ce que** l'agent de défloculation représente entre 1 et 10 % en poids de la matrice argileuse crue.

6. Formulation selon l'une quelconque des revendications 1 à 4, **caractérisée en ce qu'**elle comprend :
- de 80 % à 99,5 % en poids de matrice argileuse crue, et
- de 0,5 % à 20 % en poids d'agent de défloculation.

7. Formulation selon l'une quelconque des revendications 1 à 6, **caractérisé en ce que** l'agent de défloculation est sélectionné parmi :
- un surfactant non-ionique tel qu'un éther de polyoxyéthylène ;
- un agent anionique tel qu'un agent anionique sélectionné parmi : des sulfonates d'alkylaryle, des aminoalcool, des carbonates, des silicates, des acides gras, des humates (e.g. humates de sodium), des acides carboxyliques, des lignosulfonates (e.g. lignosulfonates de sodium), des polyacrylates, des phosphates ou polyphosphates tels que l'hexamétaphosphate de sodium, le tripolyphosphate de sodium, l'orthophosphate de sodium, des carboxyméthylcelluloses et leurs mélanges ;
- un polyacrylate tel qu'un polyacrylate sélectionné parmi du polyacrylate de sodium ou du polyacrylate d'ammonium ;
- une amine telle qu'une amine sélectionnée parmi : les 2-amino-2-methyl-1-propanol ; mono-, di- or triethanolamine ; les isopropanolamines (1-Amino-2-propanol, diisopropanolamine et triisopropanolamine) et les éthanolamines N-alkylées ; ou
- leurs mélanges.

8. Formulation selon l'une quelconque des revendications 1 à 7, **caractérisé en ce que** l'agent de défloculation est un surfactant non-ionique ou un surfactant anionique.

9. Formulation selon l'une quelconque des revendications 1 à 8, **caractérisée en ce qu'**elle comporte une teneur en eau inférieure à 10 % en poids.

10. Liant de construction comportant les constituants de la formulation pour liant de construction selon l'une quelconque des revendications 1 à 9, et une composition d'activation, de préférence la composition d'activation représente au moins 10 % en poids du liant de construction.

11. Liant de construction selon la revendication précédente comportant en outre, une composition de laitiers de hauts fourneaux, de préférence la composition de laitiers de hauts fourneaux représente au moins 5% en poids du liant de construction.

12. Liant de construction selon l'une des revendications 10 ou 11, **caractérisé en ce qu'**il comprend au moins 30 % en poids de matrice argileuse crue.

13. Liant de construction selon l'une quelconque des revendications 10 à 12, **caractérisé en ce que** l'agent de défloculation représente au moins 0,25 % en poids du liant de construction.

14. Utilisation d'un liant de construction selon l'une quelconque des revendications 10 à 13, pour la réalisation d'éléments de revêtement, en particulier des revêtements de sols, tels que des carreaux, dalles, pavés ou bordures, des revêtements de murs, tels que des éléments de façade intérieures ou extérieures, des plaquettes de parement, des éléments de bardage, ou des revêtements de toitures de type tuiles, pour la réalisation de modules de construction extrudés ou moulés, telles que des briques, ou pour la réalisation de formes extrudées variées, ou pour la réalisation de matériaux composites, tels que des panneaux de construction de type panneaux préfabriqués, de blocs préfabriqués tels que des linteaux de porte ou de fenêtre, des éléments de murs préfabriqués, ou tout autre élément de construction préfabriqué, ou pour la réalisation de modules d'isolation, tels que des panneaux de cloisons, ou des modules de construction isolants légers ou pour la réalisation par fabrication additive, telle qu'au moyen d'une imprimante 3D, d'éléments de construction, de bâtiments ou de maisons, ou d'objets de décoration.

15. Matériau de construction tel qu'un mortier, un enduit, un plâtre, un isolant, un béton allégé, un élément de préfabrication, comprenant un liant de construction selon l'une quelconque des revendications 10 à 13.
